# EUROPÄISCHE PATENTSCHRIFT

(11) **EP 1 754 650 B1**
(45) Veröffentlichungstag und Bekanntmachung des Hinweises auf die Patenterteilung: **09.06.2010**
(21) Anmeldenummer: 06016902.6
(22) Anmeldetag: 12.08.2006
(51) Int. Cl.: B62D 21/15, B62D 25/08, B60R 21/34

(54) **Frontendmodul mit einem Montageträger mit unterem Querträger**
Front-end module with mounting carrier with lower girder
Face avant technique avec support d'assemblage avec poutre basse

(30) Priorität: 20.08.2005 DE 102005039469
(43) Veröffentlichungstag der Anmeldung: 21.02.2007
(73) Patentinhaber: HBPO GmbH, 59557 Lippstadt (DE)
(72) Erfinder: Dowe, Michael, 33739 Bielefeld (DE); Feld, Steffen, 33378 Rheda-Wiedenbrück (DE); Bauer, Vitalij, 59597 Erwitte-Völlinghausen (DE); Opperbeck, Guido, 59558 Lippstadt (DE)
(74) Vertreter: Schober, Mirko

(56) Entgegenhaltungen:
- EP-A1- 1 300 293
- EP-A1- 1 352 811
- EP-A1- 1 433 663
- EP-A2- 1 241 080
- EP-A2- 1 266 818
- EP-A2- 1 352 810
- WO-A-01/00478
- FR-A- 2 859 157

## Beschreibung

Die Erfindung bezieht sich auf ein Frontendmodul für Personen- oder Kleinlastkraftfahrzeuge nach dem Oberbegriff von Anspruch 1.

Solche Frontendmodule mit einem rahmenähnlich gestalteten Montageträger sind in vielfältigen Ausführungen bekannt. Die Funktion des unteren Querträgers am Montageträger erschöpft sich in den meisten Fällen darin, eine Befestigungsmöglichkeit für das eine oder die mehreren Kühlmodule zu bieten, die in dem von den Trägern des Montageträgers umschlossenen Aufnahmeraum angeordnet werden.

Bei der Gestaltung von Frontendmodulen für Kraftfahrzeuge der in Rede stehenden Art muß den sich ständig verschärfenden Vorschriften und Empfehlungen zum Schutz von Fußgängern, die bei Unfällen mit der Frontpartie am Kraftfahrzeug kollidieren können, Rechnung getragen werden. Dies führt zu erheblichen Veränderungen in den Steifigkeits- und Festigkeitsauslegungen der im möglichen Kontaktbereich von Fußgängern angeordneten Fahrzeugbauteile. Wichtig ist, daß der sogenannte Erstkontakt im Falle einer Kollision mit einem Fußgänger möglichst tief, also so nahe wie möglich der Fahrbahn erfolgt, damit der Fußgänger nicht unter das Fahrzeug geraten kann. Deshalb ist unterhalb des bei Personen- oder Kleinlastkraftfahrzeugen stets vorhandenen Stoßfängerquerträger mit der Stoßfängerverkleidung eine weitere Schutzeinrichtung für den Fall eines Fußgängercrashs vorzusehen, nämlich ein Fußgängerschutzträger.

Dazu ist aus dem Dokument DE 103 05 652 A1 die Konstruktion eines Frontendbereichs für ein Kraftfahrzeug bekannt, bei der der Fußgängerschutzträger durch eine untere Motorraumverkleidung in Gestalt eines steifen Formteils gebildet ist, welches bis an den energieabsorbierenden Stoßfängerüberzug von unten her heranreicht.

Das Dokument DE 102 45 903 A1 beschreibt ein dem gleichen Zweck dienendes Verkleidungselement eines Kraftfahrzeuges, welches zur Unterstützung des frontseitigen Aufprallbereichs vorgesehen ist und sich an einem separaten Hilfsrahmen nach hinten hin abstützt, welcher mit der Karosseriestruktur verbunden wird.

Weiter beschreibt das Dokument EP 1 038 732 B1 einen Stoßfänger für Kraftfahrzeuge, dessen stoßabsorbierender Überzug einen nach unten hin verlängerten Aufprallbereich für den Fußgängerschutz aufweist, der durch eine innenliegende Verrippung versteift ist.

Das Dokument DE 100 42 037 A1 offenbart ein Frontendmodul, bei dem in der Einbaulage der untere Querträger des Montageträgers in Fahrzeughöhenrichtung tiefer als der Stoßfängerquerträger angeordnet ist. Dieser Querträger des Montageträgers ist an seiner Vorderseite mit vorstehenden Dämpfungsrippen versehen, um bei einem Aufprall, wie bei einem Fußgängeraufprall, als Stoßabsorptionselement zu fungieren, indem die Rippen nachgiebig verformt werden. Deshalb muß der untere Querträger des Montageträgers allein eine solche Festigkeit aufweisen, die den Anforderungen des Fußgängerschutzes entspricht.

Aus EP 1 300 293 A ist ein Fußgängerschutzträger bekannt, dessen vorderer Teil bei einem Aufprall gegenüber dem hinteren, an der Fahrzeugstruktur befestigten Teil längs einer Knicklinie abknickt.

EP 1 241 080 A2 offenbart ein Frontendmodul nach dem Oberbegriff des Anspruchs 1, bei welchem ebenfalls der untere, unterhalb des Stoßfängerquerträgers angeordnete untere Querträger des Montageträgers im Hinblick auf einen Fußgängerschutz ausgebildet ist. Dazu weist der untere Querträger des Montageträgers einen nach vorn hin vorspringenden Bereich auf, auf dessen Vorderseite ein stoßabsorbierendes Material aufgebracht ist.

Ausgehend von einem Frontendmodul mit den Merkmalen des Oberbegriffs des Patentanspruchs 1 liegt der Erfindung die Aufgabe zugrunde, den Montageträger im Bereich seines unteren Querträgers einfacher gestalten zu können und trotzdem den zu erzielenenden Fußgängerschutz zu verbessern.

Diese Aufgabe wird durch ein Frontendmodul mit den Merkmalen des Anspruchs 1 gelöst.Für die Erfindung ist wesentlich, daß der Fußgängerschutzträger ein zusätzliches, separates Teil innerhalb des Frontendmoduls ist, der in Fahrzeuglängsrichtung gesehen unterhalb des Stoßfängers an dessen Überzug anschließt und sich von da aus nach hinten erstreckt, um am unteren Querträger des Montageträgers anzuliegen. Hier wird der Fußgängerschutzträger in geeigneter Weise ebenso wie an der Stoßfängerverkleidung befestigt. Das Widerstandsmoment des Fußgängerschutzträgers für den genormten Testfall ist so ausgelegt, daß bei der Berechnung die Kennwerte des unteren Querträgers des Montageträgers mitberücksichtigt werden. Hierdurch kann der Fußgängerschutzträger mit einer geringeren Steifigkeit ausgeführt werden, weil er zusammen mit dem unteren Querträger des Montageträgers die für den Fußgängerschutz notwendige Steifigkeit und Festigkeit aufbringt. Dies spart infolge Materialverminderung Kosten ein, ohne Einschränkungen hinsichtlich des Fußgängerschutzes hinnehmen zu müssen.

Im Crashfall des mit dem erfindungsgemäßen Frontendmodul ausgestatteten Fahrzeugs überträgt der nachgebende Stoßfängerüberzug die Aufprallkräfte an den verdeckt darunterliegenden Fußgängerschutzträger, der wiederum die in ihn eingeleiteten Kräfte auf den unteren Querträger des Montageträgers überträgt. Der Fußgängerschutzträger ist so profiliert, daß er bei Abstützung am unteren Querträger des Montageträgers als Widerlager durch gezielte Deformation Energie abbaut. Der Montageträger wiederum stützt sich unmittelbar an den Längsträgerenden des Fahrzeuges ab, womit die verbleibenden Kräfte sicher in die Fahrzeugstruktur von einer Stelle aus abgeleitet werden, bis zu der hin ein großer Weg zur Aufnahme von Verformungsarbeit am Fußgängerschutzträger zur Verfügung steht. So kann im Falle einer Fußgängerkollision der Fußgängerschutzträger als sogenanntes Opferteil leicht ausgetauscht werden, soweit es zu Beschädigungen nach dem "Normcrash" entsprechend den Testvorschriften für die Fußgängerkollision kommt, durch die der Montageträger, hier insbesondere der untere Querträger am Montageträger nicht betroffen ist.

Dem Fußgängerschutzträger können weitere Funktionen mitgegeben werden, die für den Betrieb des Fahrzeugs von Vorteil sind. So kann durch eine bestimmte Formgebung die Aerodynamik am Unterboden des Fahrzeugs positiv beeinflußt werden. Der Anschluß des Fußgängerschutzträgers in seinem rückwärtigen Bereich ergibt von selbst eine Abdichtung zwischen der motorseitigen Fläche des Montageträgers und der Kühlluftzuführung von der Frontseite des Fahrzeugs her, wodurch eine Rückströmung der Warmluft, die das im Aufnahmeraum des Montageträgers angeordnete Kühlmodul verläßt, zur Anströmseite des Kühlmoduls verhindert ist.

Weitere vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in perspektivischer Wiedergabe den Montageträger eines erfindungsgemäßen Frontendmoduls mit Fußgängerschutzträger und mit dem zugleich mit dem Montageträger an der Fahrzeugstruktur zu befestigenden Stoßfängerquerträger,
- Fig. 2: den Fußgängerschutzträger gemäß Fig. 1 in perspektivischer Ansicht von oben gesehen und
- Fig. 3: den Fußgängerschutzträger gemäß den Fig. 1 und 2 in perspektivischer Ansicht von unten her gesehen.

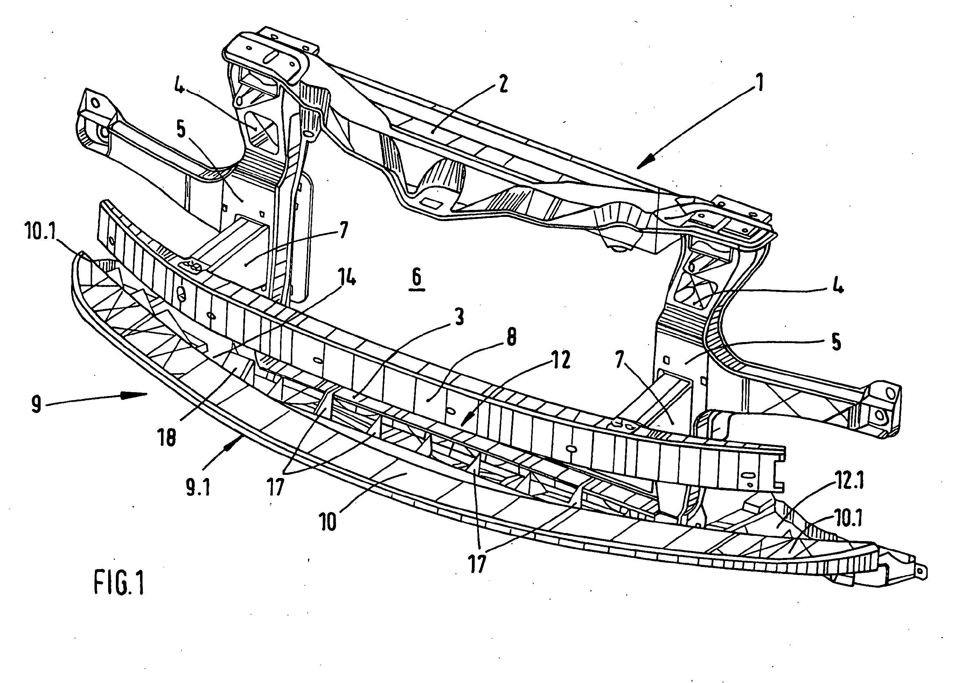

Fig. 1 zeigt im einzelnen den Aufbau des Montageträgers 1 des Frontendmoduls. Er weist einen oberen Querträger 2 auf, der üblicherweise als Schloßquerträger bezeichnet wird und dementsprechend mit Elementen der Haubenschließvorrichtung bestückt wird. Des weiteren weist der Montageträger 1 etwa parallel zum oberen Querträger 2 verlaufend einen unteren Querträger 3 auf, der über Seitenträger 4 mit dem oberen Querträger 2 verbunden ist. Im Bereich der Seitenträger 4 befinden sich Aufnahmevorrichtungen 5, um den gesamten Montageträger 1 mit den daran befindlichen Anbauten, die in der Zeichnung nicht wiedergegeben sind, an den Frontenden der Längsträger der betreffenden Fahrzeugstruktur festlegen zu können. Der obere Querträger 2, die Seitenträger 4 und der untere Querträger 3 des Montageträgers 1 umschließen einen Aufnahmeraum 6, in welchem in der Einbaulage des Frontendmoduls zumindest ein Kühlmodul angeordnet ist.

Zugleich mit dem Montageträger 1 werden an den Frontenden der Längsträger der Fahrzeugstruktur Crashboxen 7 nach vorn hin über die Seitenträger 4 des Montageträger 1 vorstehend befestigt, die einen Stoßfängerquerträger 8 tragen. Der Stoßfängerquerträger 8 trägt in der Einbaulage einen aufprallabsorbierenden Stoßfängerüberzug, der in der Zeichnung nicht dargestellt ist. An diesen Stoßfängerüberzug schließt nach unten hin ein Fußgängerschutzträger 9 mit seinem Frontbereich an, der sich in Fahrzeuglängsrichtung gesehen vor dem unteren Querträger 3 des Montageträgers 1 befindet und auf gleicher Höhe wie dieser untere Querträger 3 angeordnet ist.

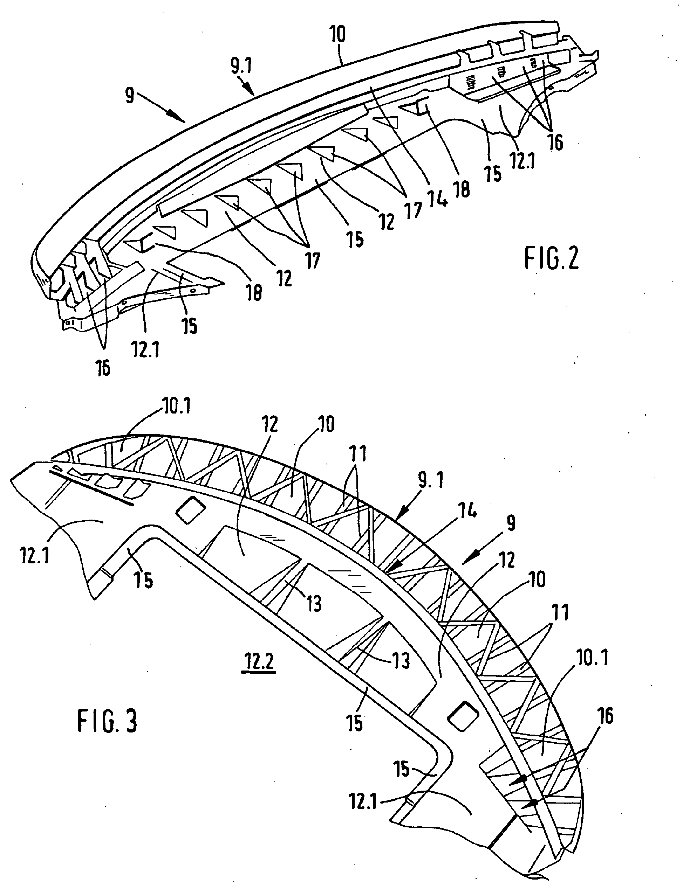

Einzelheiten des Fußgängerschutzträgers 9 ergeben sich aus den Figuren 2 und 3. Bei dem Fußgängerschutzträger 9 handelt es sich um ein flächiges Gebilde, welches als Kunststoffspritzteil ausgeführt ist. Der Fußgängerschutzträger 9 weist eine Frontfläche 9.1 auf, die der Frontkontur des Stoßfängerüberzugs folgt, der an diese Frontfläche 9.1 anschließt. In der Einbaulage ist der Fußgängerschutzträger 9 unterhalb des Stoßfängers angeordnet, seine Frontfläche 9.1 kann gegenüber der Frontkontur des Stoßfängerüberzugs etwas nach hinten versetzt angeordnet sein.

In Fahrzeuglängsrichtung nach hinten hin schließt an die Frontfläche 9.1 des Fußgängerschutzträgers 9 ein deformierbarer flächiger Aufprallbereich 10 an, der an seiner Unterseite durch Verstärkungsrippen 11 versteift ist. Der flächige Aufprallbereich 10 erstreckt sich im wesentlichen in der Fahrzeuglängs- und der Fahrzeugquerrichtung und hat eine im wesentlichen gleiche Breite. Weiter nach hinten hin schließt an den Aufprallbereich 10 ein Flächenbereich 12 an, der bezogen auf die Fahrzeughöhenrichtung tiefer als der Aufprallbereich 10 angeordnet ist. So gehen der Aufprallbereich 10 und der Flächenbereich 12 mittels einer Stufe 14 ineinander über. Der Flächenbereich 12 ist mittels Sicken 13 versteift, so kann dem Flächenbereich 12 ein anderes Deformierungsverhalten in Fahrzeuglängsrichtung gegeben werden als dem Aufprallbereich 10. Der Flächenbereich weist eine Einbuchtung 12.2 auf, die an den unteren Umriß des unteren Querträgers 3 des Montageträgers 1 (siehe Fig. 1) angepaßt ist. So setzt sich der Flächenbereich 12 des Fußgängerschutzträgers 9 in Seitenbereichen 12.1 fort, denen Seitenbereiche 10.1 des Aufprallbereichs 10 vorgelagert sind, und diese Seitenbereiche 10.1, 12.1 liegen in der Flucht der Fahrzeuglängsrichtung gesehen außerhalb des Aufnahmeraums 6 des Montageträgers 1 und damit außerhalb des Einzugsbereichs der dem Kühlmodul im Aufnahmeraum 6 zuzuführenden Kühlluft.

In diesem Zusammenhang ist von Bedeutung, daß der Aufprallbereich 10 und der Flächenbereich 12 des Fußgängerschutzträgers 9 als geschlossenwandige Bereiche ausgeführt sind. Lediglich in den Verbindungsabschnitten, die sich im Bereich der Stufe 14 zwischen den Seitenbereichen 10.1, 12.1 der geschlossenwandigen Bereiche 10, 12 befinden, sind Durchbrechungen 16 vorgesehen, um einen Luftdurchtritt zu ermöglichen. So ist es möglich, mit der durch die Durchbrüche 16 hindurchströmende Luft weitere Kühlmodule des Fahrzeugs im Betrieb zu bedienen oder Teile der Bremsanlage an den Vorderrädern mit Kühlluft zu versorgen. Im übrigen dient die geschlossenwandige Ausführung der Bereiche 10, 12 des Fußgängerschutzträgers 9 Luftleitzwecken an der Fahrzeugunterseite, um die Aerodynamik zu begünstigen. Dazu dient auch der dichte Anschluß des Flächenbereichs 12 des Fußgängerschutzträgers 9 an den unteren Querträger 3 des Montageträgers 1, wozu entlang der Einbuchtung 12.2 ein Randabschnitt 15 am Fußgängerschutzträger 9 angeordnet ist, der den unteren Querträger 3 am Montageträger 1 in der Einbaulage untergreift.

An der Oberseite des hinteren Flächenbereichs 12 des Fußgängerschutzträgers 9 finden sich Stützrippen 17 und Befestigungskonsolen 18, die rückwärtige Kanten oder Flächen aufweisen, die zur Anlage an der Vorderseite des unteren Querträgers 3 des Montageträgers 1 und damit der Abstützung des Fußgängerschutzträgers 9 nach hinten hin dienen. Mittels der Befestigungskonsolen 18 kann unter Zuhilfenahme geeigneter Befestigungsmittel der Fußgängerschutzträger 9 am unteren Querträger 3 des Montageträgers 1 fixiert werden.

## Patentansprüche

1. Frontendmodul für Personen- oder Kleinlastkraftfahrzeuge mit einem mit den Längsträgern der Fahrzeugstruktur zu verbindenden Montageträger (1), der einen oberen Querträger (2), einen unteren Querträger (3) und diese verbindende Seitenträger (4) aufweist, zwischen denen sich ein Aufnahmeraum (6) für zumindest ein Kühlmodul befindet, wobei in der Einbaulage der untere Querträger (3) des Montageträgers (1) in Fahrzeughöhenrichtung tiefer als der am Fahrzeug frontseitige Stoßfängerquerträger (8) angeordnet und in einen Fußgängeraufprallschutz einbezogen ist, wobei ferner in Fahrzeuglängsrichtung vor dem unteren Querträger (3) des Montageträgers (1) ein Fußgängerschutzträger (9) angeordnet ist, der als separates Teil ausgeführt und mittels Anlage am unteren Querträger (3) des Montageträgers (1) abgestützt ist,
**dadurch gekennzeichnet,**
**daß** der Fußgängerschutzträger (9) als flächiges, sich in der Fahrzeuglängs- und Querrichtung erstrekkendes Gebilde einen vorderen, flächigen Aufprallbereich (10) und einen dahinterliegenden Flächenbereich (12) aufweist, der tiefer als der Aufprallbereich (10) angeordnet ist und der mittels einer Stufe (14) in den vorderen Aufprallbereich (10) übergeht, wobei der vordere Aufprallbereich (10) und der Flächenbereich (12) ein unterschiedliches Deformierungsverhalten in Fahrzeuglängsrichtung aufweisen und wobei der Fußgängerschutzträger (9) und der der untere Querträger (3) zusammengenommen an die Festigkeitsanforderungen für den Fußgängeraufprallschutz angepaßt sind.

2. Frontendmodul nach Anspruch 1,
**dadurch gekennzeichnet,**
**daß** der Fußgängerschutzträger (9) als KunststoffSpritzgußteil ausgebildet ist.

3. Frontendmodul nach Anspruch 1 oder 2,
**dadurch gekennzeichnet,**
**daß** der vordere, flächige Aufprallbereich (10) und der hintere Flächenbereich (12) des Fußgängerschutzträgers (9) sich in der Fahrzeuglängsrichtung von der unteren Begrenzung des Aufnahmeraums (6) für das Kühlmodul nach vorn hin erstrecken und geschlossenwandig ausgeführt sind.

4. Frontendmodul nach Anspruch 3,
**dadurch gekennzeichnet,**
**daß** sich die geschlossenwandigen Bereiche (10, 12) des Fußgängerschutzträgers (9) in Fahrzeugquerrichtung unterhalb des Aufnahmeraums (6) des Montageträgers (1) über diesen seitlich hinaus erstrecken und zwischen den dadurch gebildeten Seitenbereichen (10.1, 12.1) der geschlossenwandigen Bereiche (10, 12) in dem dazwischenliegenden Verbindungsabschnitt der Stufe (14) Durchbrüche (16) für einen Luftdurchtritt eingeformt sind.

5. Frontendmodul nach Anspruch 3 oder 4,
**dadurch gekennzeichnet,**
**daß** der Fußgängerschutzträger (9) im rückwärtigen Flächenbereich (12) angeformte, in Höhenrichtung vorstehende Stützrippen (17) und Befestigungskonsolen (18) zur Anlage am unteren Querträger (3) des Montageträgers (1) aufweist.

6. Frontendmodul nach einem der Ansprüche 3 - 5,
**dadurch gekennzeichnet,**
**daß** der hintere Flächenbereich (12) des Fußgängerschutzträgers (9) einen rückwärtigen Randabschnitt (15) zum Untergreifen des unteren Querträgers (3) am Montageträger (1) aufweist.

7. Frontendmodul nach Anspruch 6,
**dadurch gekennzeichnet,**
**daß** die Seitenbereiche (12.1) des Flächenbereichs (12) des Fußgängerstützträgers (9) in Fahrzeuglängsrichtung nach hinten hin verlängert sind und sich der Randabschnitt (15) zum Untergreifen des unteren Querträgers (3) am Montageträger (1) entlang dem Innenrand dieser Seitenbereiche (12.1) fortsetzt.

## Claims

1. Front-end module for motor cars or light trucks with a mounting carrier (1) which is to be connected to the longitudinal beams of the vehicle structure and which has an upper cross beam (2), a lower cross beam (3) and side beams (4) which connect these together, wherein a socket space (6) is located between these beams to house at least one cooling module and wherein in the installed position the lower cross beam (3) of the mounting carrier (1) is mounted lower than the bumper cross beam (8) at the front of the vehicle and is incorporated into a pedestrian impact protector wherein furthermore seen in the longitudinal direction of the vehicle a pedestrian protection support (9) is mounted in front of the lower cross beam (3) of the mounting carrier, the pedestrian protection support being designed as a separate part and supported by contact bearing on the lower cross beam (3) of the mounting carrier (1)
**characterised in that** the pedestrian protection support (9) has as a flat surface structure extending in the longitudinal and transverse directions of the vehicle a front flat surface impact zone (10) and a flat surface zone (12) behind same which is arranged lower than the impact zone (10) and which changes by means of a step (14) into the front impact zone (10) wherein the front impact zone (10) and the flat surface zone (12) have different deformation behaviours in the longitudinal direction of the vehicle and wherein the pedestrian protection support (9) and the lower cross beam (3) taken together meet the strength requirements for the pedestrian impact protection.

2. Front end module according to claim 1
**characterised in that** the pedestrian protection support (9) is designed as an injection moulded plastics part.

3. Front end module according to claim 1 or 2
**characterised in that** the front flat surface impact zone (10) and the rear flat surface zone (12) of the pedestrian protection support (9) extend forwards in the vehicle longitudinal direction from the lower boundary of the socket space (6) for the cooling module and are designed with closed walls.

4. Front end module according to claim 3
**characterised in that** the closed-walled zones (10, 12) of the pedestrian protection support (9) extend sideways out in the vehicle transverse direction underneath and beyond the socket space (6) of the mounting carrier (1) and apertures (16) for air passage are formed between the thereby formed side areas (10.1, 12.1) of the closed-walled zones (10, 12) in the intervening connecting section of the step (14).

5. Front-end module according to claim 3 or 4
**characterised in that** the pedestrian protection support (9) has vertically protruding support ribs (17) moulded in the rear flat surface zone (12) and fastening console brackets (18) for contact bearing on the lower cross beam (3) of the mounting carrier (1).

6. Front-end module according to one of claims 3 to 5
**characterised in that** the rear flat surface zone (12) of the pedestrian protection support (9) has a rear edge section (15) for engaging underneath the lower cross beam (3) on the mounting carrier (1).

7. Front-end module according to claim 6
**characterised in that** the side areas (12.1) of the flat surface zone (12) of the pedestrian protection support (9) are extended backwards in the vehicle longitudinal direction and the edge section (15) for engaging underneath the lower cross beam (3) on the mounting carrier (1) is continued along the inner edge of these side areas (12.1).

## Revendications

1. Module frontal pour voitures particulières ou fourgonnettes, avec un support de montage (1), qui, destiné à être relié aux longerons de la structure du véhicule automobile, présente un support transversal supérieur (2), un support transversal inférieur (3) et des supports latéraux (4), qui relient ceux-ci, et entre lesquels est situé un logement (6) pour au moins un module de refroidissement, le support transversal inférieur (3) du support de montage (1)2, en position de montage, étant installé plus bas que le support de pare-chocs (8), dans le sens de la hauteur du véhicule automobile, et intégré dans un dispositif de protection des piétons contre les chocs, et un support de protection piétons contre les chocs (9), qui est exécuté en tant que pièce séparée et prend appui sur le support transversal inférieur (3) du support de montage (1) étant, de plus, disposé dans la direction longitudinale du véhicule automobile, en amont du support transversal inférieur (3) du support de montage (1),
**caractérisée en ce que,**
le support de protection piétons contre les chocs (9), en tant que structure plane s'étendant dans la direction longitudinale et dans la direction transversale du véhicule automobile, présente une zone d'impact avant, plane (10) et, derrière celle-ci, une partie plane (12), qui est disposée plus bas que la zone d'impact (10) et se raccorde à la zone d'impact antérieure (10) au moyen d'un gradin 14), la zone d'impact antérieure (10) et la partie plane (12) présentant, dans la direction longitudinale du véhicule automobile, un comportement à la déformation différent, et le support de protection piétons contre les chocs (9) et le support transversal inférieur (3) étant globalement adaptés aux exigences posées à la résistance du dispositif de protection piétons contre les chocs.

2. Module frontal selon la revendication 1,
**caractérisée en ce que**
le support de protection piétons contre les chocs (9) est réalisé en tant que pièce moulée par injection en matière synthétique.

3. Module frontal selon revendication 1 ou 2,
**caractérisée en ce que**
la zone d'impact avant, plane (10) et la partie arrière, plane (12) du support de protection piétons contre les chocs (9) s'étendent dans la direction longitudinale du véhicule automobile, de la limite inférieure du logement (6) du module de refroidissement vers l'avant, et sont réalisées à parois fermées.

4. Module frontal selon la revendication 3,
**caractérisée en ce que**
les parties à parois fermées (10, 12) du support de protection piétons contre les chocs (9) s'étendent, dans la direction transversale du véhicule automobile, au-dessous du logement (6) du support de montage (1), latéralement au-delà de celui-ci, et que des jours (16) de passage d'air sont pratiqués, dans la section de liaison du gradin (14) intercalée, entre les zones latérales (10.1, 12.1) des parties à parois fermées (10, 12), ainsi formées.

5. Module frontal selon revendication 3 ou 4,
**caractérisée en ce que**
le support de protection piétons contre les chocs (9) présente des nervures d'appui (17) et des consoles de fixation (18), formées, en saillie dans le sens de la hauteur, dans la partie plane arrière (12), pour prendre appui contre le support transversal inférieur (3) du support de montage (1).

6. Module frontal selon l'une des revendications 3 à 5,
**caractérisée en ce que**
la partie plane arrière (12) du support de protection des piétons contre les chocs (9) présente une section marginale arrière (15) pour accrocher, de dessous, le support transversal inférieur (3) au support de montage (1).

7. Module frontal selon la revendication 6,
**caractérisée en ce que**
les zones latérales (12.1) de la partie (12) du support de protection des piétons contre les chocs (9) sont prolongées vers l'arrière, dans la direction longitudinale du véhicule automobile et que la section marginale (15) pour accrocher d'en bas le support transversal inférieur (3) au support de montage (1), se poursuit le long du bord intérieur de ces zones latérales (12.1).
